# EUROPÄISCHE PATENTSCHRIFT

(11) **EP 1 516 022 B1**
(45) Veröffentlichungstag und Bekanntmachung des Hinweises auf die Patenterteilung: **24.01.2007**
(21) Anmeldenummer: 03737880.9
(22) Anmeldetag: 14.05.2003
(51) Int. Cl.: C09D 11/02, C09B 67/00

(54) **DRUCKFARBENKONZENTRAT UND VERFAHREN ZU SEINER HERSTELLUNG**
PRINTING INK CONCENTRATE AND CORRESPONDING PRODUCTION METHOD
CONCENTRE D'ENCRE D'IMPRESSION ET PROCEDE DE PRODUCTION ASSOCIE

(30) Priorität: 23.05.2002 DE 10222900
(43) Veröffentlichungstag der Anmeldung: 23.03.2005
(73) Patentinhaber: MICHAEL HUBER MÜNCHEN GMBH, 85551 Kirchheim (DE)
(72) Erfinder: KÄPPLER, Olaf, 85570 Markt Schwaben (DE); KITTLAUS, Volker, 81475 München (DE); WITTMANN, Hans-Georg, 85586 Poing (DE)
(74) Vertreter: Motsch, Andreas
(86) Internationale Anmeldenummer: PCT/DE2003/001553
(87) Internationale Veröffentlichungsnummer: WO 2003/099945

(56) Entgegenhaltungen:
- WO-A-99/05226
- GB-A- 2 324 097
- US-A- 3 583 877
- US-A- 4 015 999
- US-A- 4 990 187
- US-A- 5 919 838

## Beschreibung

Die Erfindung betrifft ein Offsetdruckfarbenkonzentrat und ein Verfahren zu seiner Herstellung.

Druckfarben werden üblicherweise durch Zusammenführen der Ausgangsstoffe Pigment, Bindemittel, Hilfsmittel und Flüssigkeiten und anschließendem Dispergieren hergestellt. Das Dispergierverfahren dient der Zerteilung der Pigmentagglomerate auf die erforderliche Pigmentteilchengröße. Dadurch werden die für die Druckfarbe notwendigen Eigenschaften, wie z.B. ausreichende Farbstärke und gute Verdruckbarkeit, erzielt.

Für eine rationellere und wirtschaftlichere Fertigung von Druckfarben ist es auch üblich, eine Zwischenstufe in oben genanntem Herstellungsverfahren zu erzeugen. Diese Zwischenstufe ist ein Druckfarbenkonzentrat, das sich von der üblichen Druckfarbe dadurch unterscheidet, dass die Pigmentkonzentration deutlich höher ist. Der Bindemittel- und Flüssigkeitsanteil ist dadurch naturgemäß geringer. Druckfarbenkonzentrate dienen sowohl zur Herstellung von fertigen Druckfarben als auch zur Verstärkung der Farbmittelkonzentration einer Druckfarbe gleichen Farbtons sowie zur Nuancierung von Druckfarben.

Bindemittel und Flüssigkeiten werden dem Druckfarbenkonzentrat zum Verdünnen zugesetzt und durch ein Mischverfahren die endgültige Druckfarbe hergestellt. Ein Dispergierverfahren ist in der Verdünnungsstufe nicht mehr erforderlich, da das Druckfarbenkonzentrat durch einen Dispergierschritt aus den Ausgangsstoffen Pigment, Bindemittel, Hilfsmittel und Flüssigkeiten erzeugt wurde.

Druckfarbenkonzentrate unterscheiden sich daher wesentlich von Pigmentzubereitungen dahingehend, dass in einem Druckfarbenkonzentrat die Pigmente bereits in dispergierter Form vorliegen.

Druckfarbenkonzentrate werden üblicherweise hergestellt, indem Feststoffe, wie farbgebende Pigmente, und feste Hilfsstoffe mit Hilfe von Dispergieraggregaten, wie Dreiwalzwerke, Kneter, Extruder oder Rührwerkskugelmühlen, in Bindemitteln und Flüssigkeiten in mehreren Stufen oder im Einstufenverfahren, wie in der EP 0 807 670 A1 beschrieben, dispergiert werden.

Bei diesem Verfahren entstehen viskose bis hochviskose Druckfarbenkonzentrate, die eine Klebrigkeit aufweisen.

Die verwendeten Feststoffe sind Pigmente, wie Phthalocyanin (Cl 15), Rubinpigment (Cl 57:1), Diarylgelb (Cl 12/13) sowie Schmuckfarbenpigmente und weitere unbunte Feststoffe, auch oft als Füllstoffe bezeichnet, wie Kreide, Kaolin, Butylhydroxytoluol oder Dispergierhilfsmittel. Diese werden in Form von Pulvern oder Granulaten eingesetzt. Die verwendeten Bindemittel können durch Verkochen von Druckfarbenharzen, Druckfarbenölen und Alkyden erzeugte Firnisse für Druckfarben sein. Als Bindemittel werden auch Alkyde, wie Leinölalkyd, Sojaölalkyd verwendet. Als flüssige Komponenten werden spezielle Mineralöle für Druckfarben mit einem Siedebereich zwischen 230-370°C, wie Printosol^{®} C 800, und pflanzliche Öle, wie Leinöl, Sojaöl, eingesetzt.

Eine auf anderem Wege erstellte Form von Druckfarbenkonzentraten stellen Flushpasten dar. Diese sind ebenfalls viskos bis hochviskos und weisen eine Klebrigkeit auf. Auch in Flushpasten liegt das Pigment in der für eine Anwendung als Druckfarbe erforderlichen Reibfeinheit vor und muss nicht mehr dispergiert oder nachgerieben werden.

Diese Druckfarbenkonzentrate werden nach der Herstellung in Transportgebinde, wie Dosen, Eimer, Fässer, Hobbocks oder Fertigungsgebinde, abgefüllt. Diese dienen zum Lagern, Transportieren und zur Entnahme der Druckfarbenkonzentrate.

Zur Herstellung einer fertigen Druckfarbe werden ein oder mehrere Druckfarbenkonzentrate entnommen, verwogen und gemischt, üblicherweise unter Zusatz von Hilfsstoffen, Bindemitteln oder flüssigen Komponenten, wie Ölen.

Das Verwiegen erfolgt üblicherweise durch manuelle Entnahme der Druckfarbenkonzentrate, z.B. mit einer Spachtel, und Einbringen in einen Wiegebehälter. Eine andere Methode stellt die Verwendung von sogenannten Dosierstationen dar, in denen die Druckfarbenkonzentrate in Vorratsgebinden, wie Hobbocks oder Fässern vorliegen und mittels Pumpen oder Hydraulikpressen gefördert und über Dosierventile volumetrisch oder gravimetrisch dosiert werden. Derartige automatische Anlagen sind handelsüblich.

Die verwogenen Komponenten werden anschließend in Mischern, wie Dissolvern, Knetern, Flügelrührern oder anderen Mischaggregaten, unter Zusatz von Hilfsstoffen, Bindemitteln und Ölen zur fertigen Farbe vermischt. Der Mischvorgang dient zur Homogenisierung des Produktes. Eine Pigmentdispergierung ist hier nicht mehr erforderlich, da diese bereits bei der Herstellung des Druckfarbenkonzentrates erfolgt ist.

Ein Problem stellt die hohe Viskosität und Klebrigkeit der Druckfarbenkonzentrate dar, speziell in Abhängigkeit von der eingesetzten Pigmentmenge. Je höher der Pigmentanteil, d.h. der Festkörperanteil des Konzentrates ist, umso zähviskoser ist das Produkt. Entsprechend erschwert sich die Handhabung, d.h. die manuelle Entnahme oder die Pumpbarkeit der Druckfarbenkonzentrate.

Eine manuelle Entnahme ist häufig nicht mehr möglich. Eine Produktentnahme kann nur noch mit erheblichem technischen Aufwand, z.B. mittels Hochdruckpressen, durchgeführt werden, häufig unterstützt durch Erwärmen des Produkts.

Während flüssige Druckfarben mit relativ geringem Aufwand gepumpt und gefördert sowie dosiert werden können, muss man bei pastösen Druckfarbenkonzentraten bereits aufwändige und teure Saugpumpen, wie Spindelpumpen oder Druckluftkolbenpumpen, einsetzen. Die Anzahl unterschiedlicher Farbtöne, die beim Erstellen von Sonderfarben erforderlich ist, bedingt, dass für eine automatische Mischanlage üblicherweise 20 bis 60 Pumpeneinheiten benötigt werden, was einen erheblichen Aufwand darstellt.

Bei noch höheren Viskositäten der Druckfarbenkonzentrate müssen Hydraulikpressen eingesetzt werden, um noch eine ausreichende Förderung des Produkts zu erreichen. Diese Hochdrucktechnik erhöht den Investitionsaufwand um ein Vielfaches. Eine manuelle Entnahme, beispielsweise von solchen Offsetdruckfarbenkonzentraten ist in der Regel überhaupt nicht mehr möglich.

Die Aufgabe vorliegender Erfindung besteht darin, die geschilderten Nachteile des Standes der Technik zu überwinden und gleichzeitig ein Offsetdruckfarbenkonzentrat bereitzustellen, das sich einfach transportieren und einfach mit Zusatzkomponenten mischen lässt.

Die Aufgabe wird durch ein Offsetdruckfarbenkonzentrat, in dem das Pigment in der für die Verwendung der Offsetdruckfarben erforderlichen Reibfeinheit vorliegt, in Form von beschichteten nichtklebrigen und/oder unbeschichteten nichtklebrigen Pellets gelöst.

Hierzu wurde davon ausgegangen, die hohe Viskosität der Offsetdruckfarbenkonzentrate zu nutzen und diese trotz ihrer zähviskosen und klebrigen Eigenschaften wie einen Festkörper zu betrachten und einzusetzen. Dazu musste das klebende, hochviskose ursprüngliche Offsetdruckfarbenkonzentrat durch Änderung und Anpassung seiner Eigenschaften in einen neuen, nichtklebrigen Stoff verändert werden.

Die Anpassung erfolgt durch eine Reduzierung der Klebrigkeit des Konzentrats durch Erhöhung des Festkörperanteils des Konzentrats. Die Fließfähigkeit und Verformbarkeit des Offsetdruckfarbenkonzentrat wird durch die Kombination aus hohem Pigmentanteil und geringem Bindemittelanteil reduziert. Die daraus erhaltenen Offsetdruckfarbenkonzentrate und die daraus gewonnenen Pellets können noch eine geringe Restklebrigkeit aufweisen, die durch eine anschließende Beschichtung oder Umhüllung reduziert oder ausgeschlossen werden kann. Der Pigmentanteil im Offsetdruckfarbenkonzentrat beträgt bei den erfindungsgemäßen Pellets üblicherweise 45-65%. Die Pigmentkonzentration ist damit deutlich höher als bei üblichen Offsetdruckfarbenkonzentraten.

Die Form der Pellets ist idealerweise kugelförmig. Sie können jedoch auch andere symmetrische und unsymmetrische Formen aufweisen.

Die Größe der Pellets ist idealerweise an den folgenden Dosierprozess angepasst. Die spezifische Dichte des Offsetdruckfarbenkonzentrats beträgt in der Regel 0,9-2,0 g/cm³. Bei einer Verwiegegenauigkeit von +/- 1 g hat ein Pellet ein Volumen von ca. 0,5-1,0 cm³. Je nach den eingesetzten Folgeprozessen kann das Volumen auch individuell anders gewählt werden.

Das erfindungsgemäße Offsetdruckfarbenkonzentrat in Form von beschichteten nichtklebrigen und/oder unbeschichteten nichtklebrigen Pellets hat eine Reihe von wesentlichen Vorteilen.

So kann dieses wie ein Schüttgut behandelt werden. Es kann also jedes Pellet einzeln entnommen und zählend dosiert werden. Eine manuelle Entnahme ist nunmehr nicht nur auch bei Offsetdruckfarbenkonzentraten möglich, sondern besonders einfach durchführbar.

Das erfindungsgemäße Offsetdruckfarbenkonzentrat lässt sich also leicht dosieren und ist somit einem Einsatz in Standardfeststoffdosieranlagen zugänglich, wodurch eine Automatisierung des Wiege- und Dosierprozesses möglich wird.

Die Pellets sind, wie ein Feststoff, leicht zu fördern und damit leicht umfüllbar. Ebenso können sie in einfacher Weise wie ein rieselfähiger Feststoff abgefüllt und transportiert werden. Da die Pellets keine Klebrigkeit aufweisen, ist ein Verkleben und Verbacken der Teilchen ausgeschlossen.

Bei den Offsetdruckfarbenkonzentraten des Standes der Technik kommt es zu einer starken Verschmutzung aller produktberührten Teile, was einen hohen Reinigungsaufwand nach sich zieht, sowie ein Entsorgungsproblem der Restmengen und der Verpackungen. Im Gegensatz dazu kann nunmehr eine Verschmutzung durch Abfärben der Oberfläche von Offsetdruckfarbenkonzentraten verhindert werden. Die Verschmutzung der produktberührten Teile ist minimal, so dass der Reinigungsaufwand sehr gering ist. Bei der Entleerung fallen keine Rückstände und damit kein Abfall an, was aus Umweltschutzgründen als besonders vorteilhaft angesehen werden muss. Darüber hinaus kommt es zu keinem Materialverlust und es können einfachere Verpackungen zum Einsatz kommen.

Die beschichteten Pellets werden nach dem Verwiegen in gängigen Mischaggregaten vermischt. Hierzu gehören beispielsweise Dissolver, Kneter, Vibrationsmischer, Taumelmischer. Ein Nachdispergieren oder Nachreiben ist nicht erforderlich.

Das ggf. eingesetzte Beschichtungsmaterial wird als Bestandteil des Offsetdruckfarbenkonzentrats Bestandteil der daraus gefertigten Druckfarbe. Das Beschichtungsmaterial muss also vor der Weiterverarbeitung nicht entfernt werden.

Es wird ferner ein Verfahren zur Herstellung einer Druckfarbe unter Verwendung des erfindungsgemäßen Offsetdruckfarbenkonzentrats bereitgestellt.

Auf diese Weise können beispielsweise UV-Druckfarben, Flexodruckfarben auf Wasserbasis, Toluoltiefdruckfarben, lösemittelhaltige Druckfarben, beispielsweise auf der Basis von Ethanol und Ethylacetat, Nitrocellulose-Druckfarben, Siebdruckfarben, Künstlerfarben oder Tampondruckfarben hergestellt werden.

In einer bevorzugten Ausführungsform der Erfindung wird ein Offsetdruckfarbenkonzentrat bereitgestellt, bei dem die Beschichtung aus pulverigen Feststoffen, Wachs oder flüssigen Stoffen besteht. Hierbei kann der flüssige Stoff ein Öl sein.

Das jeweilige Beschichtungsmaterial kann somit an den jeweiligen Verwendungszweck optimal angepasst werden.

Als Beschichtungsmaterial können feste und flüssige Materialien eingesetzt werden, die druckfarbenkompatibel sind. Geeignete feste Materialien sind beispielsweise pulverförmige Stoffe, wie Kreide, Kaolin, paraffinische Wachse, PE-Wachse, Fischer-Tropsch-Wachse oder Talkum. Die pulverförmigen Stoffe haben eine durchschnittliche Korngröße von maximal 25 µm, wobei im Idealfall die Korngröße kleiner als 5 µm ist. Durchschnittliche Korngrößen von über 25 µm können zwar auch eingesetzt werden, führen jedoch in der Anwendung des Endproduktes Druckfarbe zu Problemen, wie beispielsweise zum Aufbauen auf der Druckplatte.

Durch die Beschichtung weist die Oberfläche der Pellets praktisch keine klebrigen Eigenschaften mehr auf.

In einer weiteren bevorzugten Ausführungsform der Erfindung ist die Beschichtung des Offsetdruckfarbenkonzentrats eine feste Hülle. Eine solche vollständige feste Umhüllung kann beispielsweise eine Wachshülle sein.

Ein weiterer Gegenstand der vorliegenden Erfindung ist ein Verfahren zur Herstellung des Offsetdruckfarbenkonzentrats, das dadurch gekennzeichnet ist, dass das Offsetdruckfarbenkonzentrat zerkleinert und beschichtet wird. Die Herstellung der Pellets kann separat erfolgen, aber sich auch direkt an die Erzeugung des Offsetdruckfarbenkonzentrats anschließen.

Zur Pelletierung können bekannte Verfahren, wie sie beispielsweise in der Lebensmittel- oder Futtermittelherstellung angewandt werden, zum Einsatz kommen.

Hierbei kann entweder ein portionierter Austrag aus einer Düse bzw. einem Dosierventil oder die Erzeugung eines Offsetdruckfarbenkonzentratstrangs in einer Matrize mit anschließender Zerteilung durchgeführt werden. Im Extremfall wird ein Offsetdruckfarbenkonzentratstrang bzw. -faden erzeugt, der erst beim folgenden Verarbeitungsschritt der Dosierung abgelängt wird.

In einer bevorzugten Ausführungsform des erfindungsgemäßen Verfahrens erfolgt die Beschichtung durch direktes Aufbringen des pulverigen Feststoffs auf das Offsetdruckfarbenkonzentrat.

Das Aufbringen des pulverförmigen Stoffes kann z.B. durch direktes Besprühen der Pellets oder Wälzen der Pellets im jeweiligen Beschichtungsmaterial erfolgen.

In einer weiteren bevorzugten Ausführungsform des erfindungsgemäßen Verfahrens werden die pulverigen Feststoffe indirekt über einen flüssigen Träger aufgebracht, der anschließend verdunstet.

Als Träger kommen Flüssigkeiten und Lösungsmittel in Betracht, in denen das Beschichtungsmaterial suspendiert bzw. gelöst werden kann. Die Applikation kann durch Sprühen oder Eintauchen in die Suspension bzw. Lösung erfolgen. Durch anschließendes Trocknen wird die Trägerflüssigkeit oder das Lösungsmittel entfernt und das beschichtete Pellet bleibt zurück.

In einer weiteren bevorzugten Ausführungsform des erfindungsgemäßen Verfahrens wird die feste Hülle durch Aufbringen eines geschmolzenen Stoffes oder durch Aufbringung eines gelösten, zur Umhüllung geeigneten Stoffes erzeugt, wobei das Lösungsmittel anschließend verdunstet.

Beispielsweise kann eine Wachshülle durch Schmelzen des Wachses und anschließendes Benetzen der Oberfläche des Offsetdruckfarbenkonzentrats erzeugt werden. Als Wachs eignet sich z.B. Paraffinwachs, PE-Wachs und Fischer-Tropsch-Wachs.

Zur Umhüllung des Offsetdruckfarbenkonzentrats geeignete Stoffe sind beispielsweise Fette, wie Palmin^{®}, oder Gelatine.

Der zur Umhüllung geeignete Stoff kann in einer Trägerflüssigkeit gelöst werden, die nach der Applikation auf die unbeschichteten Offsetdruckfarben-Pellets durch Verdunsten entfernt wird. Indem dieser Vorgang wiederholt wird, kann die Schichtdicke der Umhüllung beliebig groß gestaltet werden.

Durch Einsatz hoher Festkörperanteile von Pigment im Offsetdruckfarbenkonzentrat von über 50% kann die Restklebrigkeit des Produktes derart herabgesetzt sein, dass eine Schutzhülle in Form einer Beschichtung nicht mehr erforderlich ist.

Hierdurch entstehen weitere Vorteile, wie z.B. der Wegfall des Beschichtungsprozesses und der Wegfall der Zusatzkomponenten für die Beschichtung.

Die Erfindung wird anhand der Beispiele für die Herstellung von beschichteten und unbeschichteten Pellets näher erläutert.

### Beispiel 1

In einem Laborextruder wurde ein Offsetdruckfarbenkonzentrat hergestellt, indem man diesen mit 45 Gew.-% Pigment Yellow (CI 13) und 55 Gew.-% Offsetbindemittel Grinding Base 100S der Fa. Lawter befüllte und das aus dem Extruder ausgebrachte Offsetdruckfarbenkonzentrat in Stangenform entnahm. Nach Abkühlung auf Raumtemperatur weist das Produkt nur eine geringe Restklebrigkeit und keine signifikante Verformbarkeit auf.

Das Offsetdruckfarbenkonzentrat wurde mechanisch in Pellets von etwa 1g pro Stück geschnitten.

Dann wurden die Pellets in eine geschmolzene Wachspaste getaucht, die aus 37,5 Gew.-% PE-Wachs mit einem Schmelzbereich um 115°C und 62,5 Gew.-% Leinöl bestand. Anschließend wurden die Pellets ausgesiebt und abgekühlt.

Die so erhaltenen beschichteten Pellets weisen praktisch keine Klebrigkeit mehr auf.

### Beispiel 2

Ein Offsetdruckfarbenkonzentrat, das gemäß Beispiel 1 hergestellt wurde, wurde in einen beheizten Behälter gegeben. Bei Erreichen einer Produkttemperatur von ca. 70°C wurde das Offsetdruckfarbenkonzentrat mit Hilfe einer Zahnradpumpe durch eine Matrize mit einer Bohrung von 4 mm Durchmesser gepresst. Der entstandene 4 mm dicke Farbstrang wurde in 10 mm lange Pellets geschnitten und anschließend in einem Pulver von Talkum gewälzt, wobei eine Beschichtung aus dem Pulvermaterial entstand. Das überschüssige Pulver wurde durch Sieben entfernt.

Die so erhaltenen beschichteten Pellets weisen praktisch keine Klebrigkeit mehr auf.

### Beispiel 3

Es wurden unbeschichtete Offsetdruckfarben-Pellets gemäß Beispiel 2 hergestellt und diese in eine wässrige Wachsemulsion eingetaucht, anschließend ausgesiebt und im Warmluftstrom getrocknet.

Die so erhaltenen beschichteten Pellets weisen praktisch keine Klebrigkeit mehr auf.

### Beispiel 4

Es wurden unbeschichtete Offsetdruckfarben-Pellets gemäß Beispiel 2 hergestellt und diese in eine Siliconemulsion getaucht, anschließend ausgesiebt und im Warmluftstrom getrocknet.

Die so erhaltenen beschichteten Pellets weisen praktisch keine Klebrigkeit mehr auf.

### Beispiel 5

Eine Standard-Flushpaste (Pigment Yellow Cl 12) wurde in einem Behälter erwärmt. Bei Erreichen von 60°C wurde die Flushpaste mit Hilfe einer Pumpe durch eine Matrize mit einem Lochdurchmesser von 4 mm gepresst. Der entstandene Druckfarbenkonzentratstrang wurde in 10 mm lange Pellets geschnitten. Diese wurden gemäß Beispiel 1 beschichtet.

Die so erhaltenen beschichteten Pellets weisen praktisch keine Klebrigkeit mehr auf, sind aber noch gering verformbar.

### Beispiel 6

Es wurden unbeschichtete Pellets gemäß Beispiel 5 hergestellt. Diese wurden gemäß Beispiel 2 beschichtet.

Die so erhaltenen beschichteten Pellets weisen praktisch keine Klebrigkeit mehr auf.

### Beispiel 7

Es wurden unbeschichtete Pellets gemäß Beispiel 5 hergestellt. Diese wurden gemäß Beispiel 3 beschichtet.

Die so erhaltenen beschichteten Pellets weisen praktisch keine Klebrigkeit mehr auf.

### Beispiel 8

Es wurden unbeschichtete Pellets gemäß Beispiel 5 hergestellt. Diese wurden gemäß Beispiel 4 beschichtet.

Die so erhaltenen beschichteten Pellets weisen praktisch keine Klebrigkeit mehr auf.

### Beispiel 9

Ein Offsetdruckfarbenkonzentrat gemäß Beispiel 1 wurde mit einem Auspresszylinder einer Matrize zugeführt. Der erhaltene Offsetdruckfarbenkonzentratstrang wurde mit in Luft aufgewirbeltem Talkumpulver besprüht und eine feine Schicht auf der Strangoberfläche aufgetragen. Der beschichtete Strang wurde aufgewickelt oder in ein Gebinde abgelassen. Bei der Einwaage des Fertigdruckfarbenrezepts wurde der Strang einfach abgeschnitten oder pelletiert.

Der beschichtete Strang aus Offsetdruckfarbenkonzentrat weist praktisch keine Klebrigkeit mehr auf.

### Beispiel 10

Ein Offsetdruckfarbenkonzentrat gemäß Beispiel 1 wurde in ein Dosierventil gefördert. Je Dosierhub wurde ein Teil des Offsetdruckfarbenkonzentrat ausgestoßen.

Die so portionierten Pellets aus Offsetdruckfarbenkonzentrat fielen in ein Wirbelbett, das im Boden angeordnete Luftdüsen aufwies, so dass die Pellets zusammen mit einem umhüllenden staubförmigen Trennpulver aus Talkum in Schwebe gehalten wurden.

Die so erhaltenen beschichteten Pellets weisen praktisch keine Klebrigkeit mehr auf.

### Beispiel 11

Ein Offsetdruckfarbenkonzentrat, das gemäß Beispiel 1 hergestellt wurde, wurde am Austritt des Extruders in ein Rohr geleitet. Durch 25 seitlich im Rohr angebrachte Bohrungen trat das Konzentrat in Teilsträngen mit ca. 100°C aus. Die Teilstränge wurden auf ein Kühlband nebeneinander abgelegt und abtransportiert. Das Band wurde zur Vermeidung der Anhaftung des Konzentrats mit Talkum bepudert, ebenso wurden die Konzentratstränge bepudert.

Nachdem sich das Konzentrat auf 25°C abgekühlt hatte, wurden die Konzentratstränge in einer rotierenden Schneideeinrichtung in Stücke mit 20 mm Länge geschnitten. Überschüssiges Talkumpulver wurde in einem Schüttelsieb abgetrennt.

Die so erhaltenen Pellets weisen praktisch keine Klebrigkeit mehr auf.

### Beispiel 12

In einem Laborextruder wurde ein Offsetdruckfarbenkonzentrat hergestellt, indem man diesen mit 63 Gew.-% Pigment Blau (C.I. 15:3), z.B. Lutetia Cyanin J 505 Micropearl, und 37 Gew.-% Offsetbindemittel Grinding Base 100S der Fa. Lawter befüllte, und das aus dem Extruder ausgebrachte Offsetdruckfarbenkonzentrat in Stangenform entnahm.

Nach Abkühlung auf Raumtemperatur weist das Produkt keine Klebrigkeit mehr auf und wird in Pellets von ca. 1 cm³ Volumen geschnitten.

## Patentansprüche

1. Offsetdruckfarbenkonzentrat, in dem das Pigment in der für die Verwendung der Offsetdruckfarben erforderlichen Reibfeinheit vorliegt, in Form von beschichteten nichtklebrigen und/oder unbeschichteten nichtklebrigen Pellets.

2. Offsetdruckfarbenkonzentrat nach Anspruch 1, **dadurch gekennzeichnet, dass** die Beschichtung aus pulverigen Feststoffen, Wachs oder flüssigen Stoffen besteht.

3. Offsetdruckfarbenkonzentrat nach Anspruch 2, **dadurch gekennzeichnet, dass** der flüssige Stoff ein Öl ist.

4. Offsetdruckfarbenkonzentrat nach Anspruch 1 oder 2, **dadurch gekennzeichnet, dass** die Beschichtung eine feste Hülle ist.

5. Verfahren zur Herstellung eines Offsetdruckfarbenkonzentrats nach einem der vorhergehenden Ansprüche 1-4, **dadurch gekennzeichnet, dass** das Offsetdruckfarbenkonzentrat zerkleinert und beschichtet wird.

6. Verfahren nach Anspruch 5, **dadurch gekennzeichnet, dass** die Beschichtung durch direktes Aufbringen des pulverigen Feststoffs auf das Offsetdruckfarbenkonzentrat erfolgt.

7. Verfahren nach Anspruch 5, **dadurch gekennzeichnet, dass** die pulverigen Feststoffe indirekt über einen flüssigen Träger aufgebracht werden, der anschließend verdunstet.

8. Verfahren nach Anspruch 5, **dadurch gekennzeichnet, dass** die feste Hülle durch Aufbringen eines geschmolzenen Stoffes erzeugt wird.

9. Verfahren nach Anspruch 5, **dadurch gekennzeichnet, dass** die feste Hülle durch Aufbringen eines gelösten zur Umhüllung geeigneten Stoffes aufgebracht wird, wobei das Lösungsmittel anschließend verdunstet.

10. Verfahren zur Herstellung einer Druckfarbe unter Verwendung eines Offsetdruckfarbenkonzentrats nach einem der Ansprüche 1-4.

## Claims

1. An offset printing ink concentrate, wherein the pigment is present in the fineness of grinding which is necessary for the use of offset printing inks, in the form of coated non-tacky and/or uncoated non-tacky pellets.

2. The offset printing ink concentrate according to claim 1, **characterized in that** the coating consists of powdery solids, wax or liquid substances.

3. The offset printing ink concentrate according to claim 2, **characterized in that** said liquid substance is an oil.

4. The offset printing ink concentrate according to claim 1 or 2, **characterized in that** said coating is a solid encasing.

5. A method for producing an offset printing ink concentrate according to one of the preceding claims 1-4, **characterized in that** said offset printing ink concentrate is comminuted and coated.

6. The method according to claim 5, **characterized in that** said coating occurs by direct application of said powdery solid onto the offset printing ink concentrate.

7. The method according to claim 5, **characterized in that** said powdery solids are indirectly applied via a liquid carrier that subsequently evaporates.

8. The method according to claim 5, **characterized in that** said solid encasing is produced by applying a melted substance.

9. The method according to claim 5, **characterized in that** said solid encasing is applied by applying a dissolved substance that is suitable for encasing, with the solvent subsequently evaporating.

10. A method for producing a printing ink by using an offset printing ink concentrate according to one of claims 1-4.

## Revendications

1. Concentré d'encre pour impression offset, où le pigment se présente dans la finesse de frottement nécessaire pour l'utilisation des encres pour l'impression offset, sous la forme de pellets couverts avec une couche sans adhérence et/ou non couverts avec une couche sans adhérence.

2. Concentré d'encre pour impression offset selon la revendication 1, **caractérisé en ce que**, la couche est formée de matériaux solides sous forme de poudre, de cire ou de substances fluides.

3. Concentré d'encre pour impression offset selon la revendication 2, **caractérisé en ce que**, la substance fluide est une huile.

4. Concentré d'encre pour impression offset selon la revendication 1 ou 2, **caractérisé en ce que**, la couche est une enveloppe compacte.

5. Procédé de fabrication d'un concentré d'encre pour impression offset selon l'une d'entre les revendications 1 - 4, **caractérisé en ce que**, le concentré d'encre pour impression offset est broyé et couvert avec une couche.

6. Procédé selon la revendication 5, **caractérisé en ce que**, le recouvrement a lieu par l'application directe du matériau solide sous forme de poudre, sur le concentré d'encre pour impression offset.

7. Procédé selon la revendication 5, **caractérisé en ce que**, les matériaux solides sous forme de poudre sont appliqués indirectement par un porteur fluide, qui s'évapore ensuite.

8. Procédé selon la revendication 5, **caractérisé en ce que**, l'enveloppe compacte se génère par l'application d'un matériau fondu.

9. Procédé selon la revendication 5, **caractérisé en ce que**, l'enveloppe compacte se dépose par l'application d'un matériau dissous, adéquat pour recouvrement, où le dissolvant s'évapore ensuite.

10. Procédé de fabrication d'une encre pour impression, par l'utilisation d'un concentré d'encre pour impression offset selon l'une d'entre les revendications 1 - 4.
